(19) **Europäisches Patentamt**

**European Patent Office**

**Office européen des brevets**

(11) Publication number: **0 298 714 B1**

## (12) EUROPEAN PATENT SPECIFICATION

(45) Date of publication of patent specification: **06.05.92**

(51) Int. Cl.⁵: **B60T 7/12**, B60T 13/26, B60T 1/06

(21) Application number: **88306149.1**

(22) Date of filing: **06.07.88**

(54) **Motor vehicle braking system.**

(30) Priority: **07.07.87 US 70796**

(43) Date of publication of application:
**11.01.89 Bulletin 89/02**

(45) Publication of the grant of the patent:
**06.05.92 Bulletin 92/19**

(84) Designated Contracting States:
**DE FR GB IT**

(56) References cited:
**DE-A- 2 722 358**
**DE-A- 2 929 983**
**US-A- 4 591 019**

(73) Proprietor: **S.B.R. LIMITED**
**P.O. Box 119 Commerce House**
**St. Peter Port Guernsey Channel Islands(GB)**

(72) Inventor: **Paulson, William Charles**
**R.R. 2**
**Georgetown Ontario L7G 4S5(CA)**

(74) Representative: **Barker, Rosemary Anne et al**
**c/o Mewburn Ellis, 2 Cursitor Street**
**London EC4A 1BO(GB)**

Rank Xerox (UK) Business Services
(3.08/2.18/2.0)

## Description

This invention relates to method of operating a motor vehicle braking system providing automatic braking when the vehicle detects an obstruction, and a system for carrying out the method.

It is already known, from US-A-4146107 and GB-A-2027828, particularly in connection with goods-carrying vehicles, to provide at the rear of the vehicle (which may for example be a truck of the trailer of a tractor/trailer combination) a detector which, when the vehicle reverses, detects an obstruction and serves to generate a signal which can be used to initiate application of the vehicle's brakes so bringing the vehicle to a standstill and minimising the risk of damage or injury to any obstruction or person behind the vehicle.

There are several types of such detectors available, and at least one known system is interrelated to a driver-controlled reverse gear selector on the vehicle in such a manner that the system is armed or made ready for brake application to be effected upon receiving a signal from the detector only when the vehicle's driver has selected reverse gear. Thus with this system a signal generated by the detector causes brake application only when the vehicle's driver has deliberately operated the selector for the vehicle to be driven backwards.

There are other methods which necessitate the engaging of an electrical switch, or the operating of a camera and associated equipment, and rely on the driver to control or activate. None of these will operate automatically if for instance the vehicle should commence running backwards, e.g. down a hill when out of gear, or as a result of being impacted at the front. Thus the prior proposed systems do not safeguard against the risk of accident in the event of unintentional reverse movement of the vehicle, which can arise in a substantial number of varied circumstances of which possibly the most important one is the risk arising from inattentive parking upon an inclined surface.

An object of the present invention is to provide a braking system which safeguards against any reverse movement, whether intentional or unintentional, and in which the need for operation of an electrical switch or a reverse selector of the vehicle to have been shifted into the reverse condition is obviated.

With this object in view the present invention provides a method of operating the braking system of a vehicle comprising the steps of automatically pneumatically arming the braking system for actuation, detecting the vehicle contacting an obstruction when the vehicle is moving and generating a pneumatic detector signal to cause brake application, the braking system being releasable, automatically rearmable and disarmed automatically on forward movement of the vehicle.

The system is preferably constantly armed by auxiliary air pressure and is advantageously disarmed automatically after a predetermined time interval. The braking system may be constantly armed by any one of an emergency brake system, an auxiliary air tank or an auxiliary reservoir.

Preferably the braking system is disarmed automatically upon the forward movement of the vehicle attaining a pre-determined speed determined by sensing the rotational speed of a member which rotates in one direction proportional to said speed. Alternatively the pre-determined forward speed of the vehicle is determined by sensing the velocity of the air flowing past the vehicle.

The invention also provides a motor vehicle braking system comprising detector means, positioned on the motor vehicle, constructed and arranged to detect the vehicle contacting an obstruction when the vehicle is moving and to generate a pneumatic signal on said contact, pneumatic means to arm the system whereby the detector signal causes brake application, means to release and to automatically rearm the system and further including means to disarm the braking system automatically upon forward movement of the vehicle attaining a pre-determined speed.

The system preferably also includes an auxiliary air tank to arm the system which is thereby constantly armed and is constructed and arranged so as to be released and rearmed by the application of any one of a foot brake, a trailer only brake or an emergency brake. The system advantageously includes means to disarm the system automatically after a pre-determined time.

The system may also include an auxiliary air reservoir to arm the system which is rearmed by filling the reservoir and disarmed by the reservoir being bled over a predetermined time period.

The system advantageously also includes detector means comprising a gate positoned forwardly of at least one wheel of the vehicle to detect the vehicle contacting an obstruction.

The invention will be described further, by way of example, with reference to the accompanying drawings in which:

Fig. 1 is a perspective view of the rear portion of the trailer of a tractor-trailer combination;

Fig. 2 is a transverse cross-sectional view of the rear bumper of the trailer taken along line 2-2 of Fig. 1;

Fig. 3. is a cross-sectional view of a first embodiment associated with the wheel hub assembly of the trailer of Fig. 1;

Fig. 4 is an exploded perspective view of the rotation detector of the wheel hub assembly of Fig. 3;

Fig. 5 is a view of the magnetic activator disc of the rotation detector of Fig. 4 taken along line 5-5 of Fig. 3 and showing its position in relation to the valve pin when the trailer is moving forwardly;

Fig. 6 is a cross-sectional view taken along line 6-6 of Fig. 5;

Fig. 7 is a view similar to Fig. 5 showing the position of the disc in relation to the valve pin when the trailer is moving in reverse;

Fig. 8 is a cross-sectional view taken along line 8-8 of Fig. 7;

Fig. 9 is a schematic flow diagram of the air brake system of the device;

Fig. 10 is a flow diagram similar to Fig. 9 showing the brake system in operation;

Fig. 11 is a cross-sectional view of a second embodiment of the invention associated with the drive shaft of a vehicle;

Fig. 12 is a view taken along line 12-12 of Fig. 10;

Fig. 13 is a view taken along line 13-13 of Fig. 11;

Fig. 14 is a schematic flow diagram of a second embodiment of the air brake system of the device;

Fig. 15 is a side elevation of a wheel hub and brake drum casing of the trailer of Fig. 1 used in conjunction with the embodiment of Fig. 14;

Fig. 16 is a cross-sectional view of area 16 in Fig. 15;

Fig. 17 is a view taken along line 17-17 of Fig. 16;

Fig. 18 is a side elevation of an alternate disarming device used with the embodiment of Fig. 14;

Fig. 19 is a cross-sectional view of an alternate embodiment of the rear bumper of Figs. 1 and 2;

Fig. 20 is a schematic flow diagram of a third embodiment of the air brake system of the device;

Fig. 21 is a flow diagram similar to Fig. 18 showing the brake system in operation;

Fig. 22 is a schematic flow diagram of a fourth embodiment of the air brake system of the device;

Fig. 23 is a flow diagram of a fifth embodiment of the air brake system of the device,

Fig. 24 is a side elevational view of a gate actuator for the air brake system of the device;

Fig. 25 is a detailed view of the gate actuator of Fig. 24; and

Fig. 26 is a front elevational view of the gate actuator of Figs. 24 and 25.

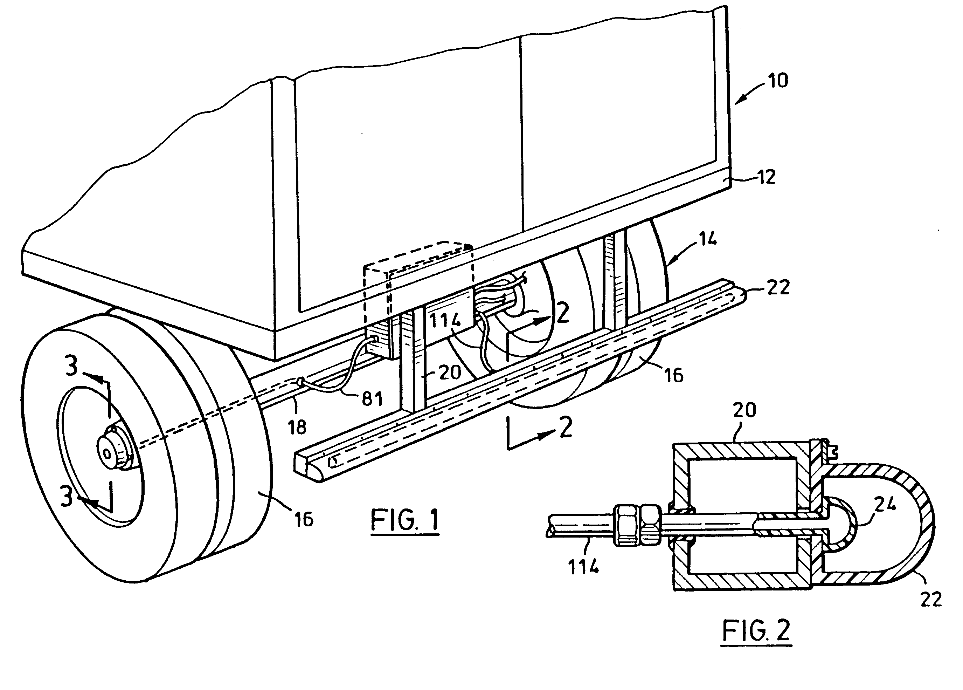

The embodiment shown in Figs. 1 to 10 of the drawings consists of a trailer 10 of a tractor-trailer combination, with a body frame 12 and including a set of rear wheels 14 comprising a pair of wheels 16 journally mounted for free rotation on a fixed axle 18. A fixed bumper frame 20 depends from the body frame 12 and carries a rearwardly projecting pneumatic bumper tube 22 of flexible material. As seen in Fig. 2, a second pneumatic tube 24 is disposed within the bumper tube 22 and extends substantially the length of the bumper tube 22.

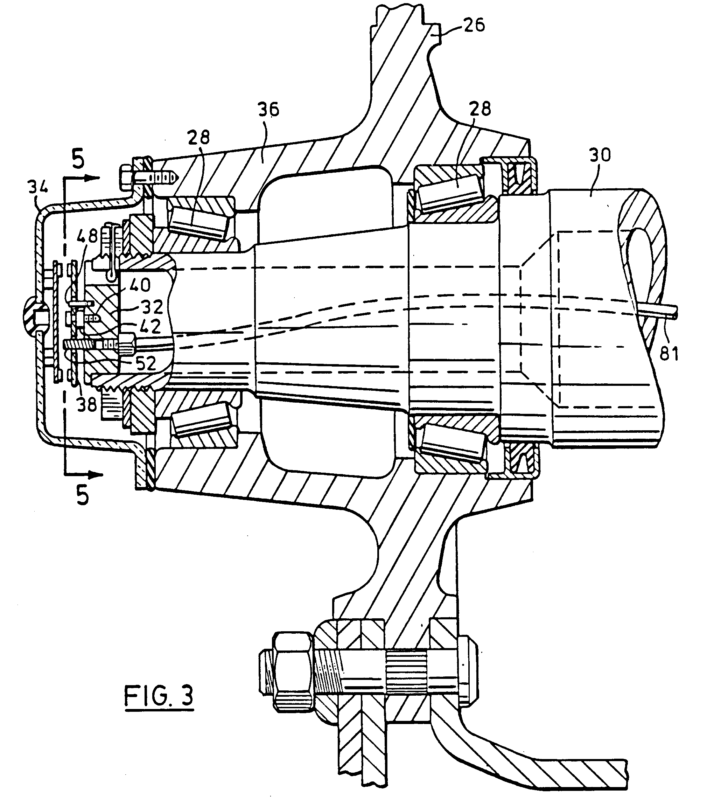

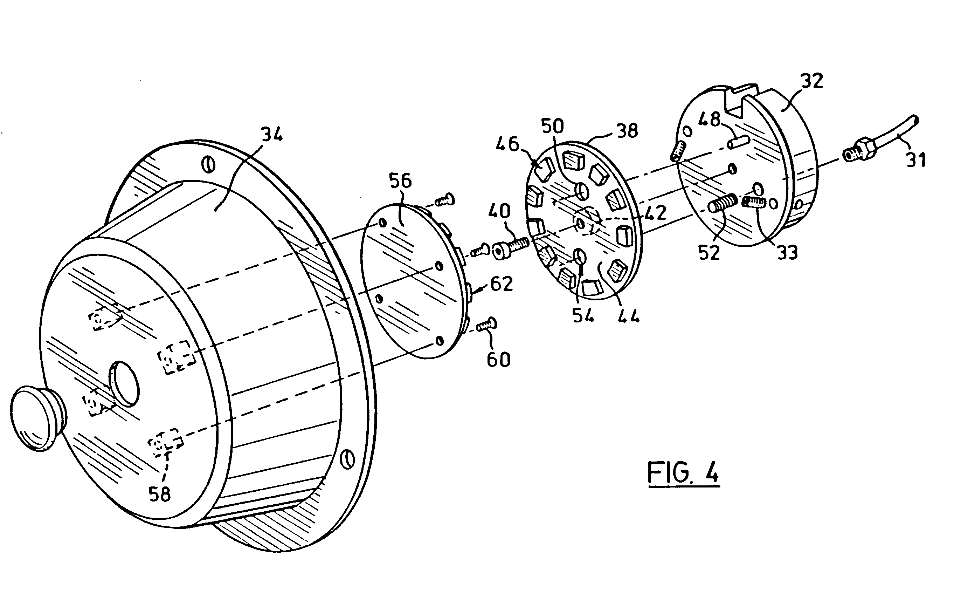

The hub assembly of one wheel 16 is shown in Fig. 3 and comprises a wheel hub 26 journally mounted by bearings 28 on a fixed axle 30 having an axle bore closed at one end by a plug 32 which is fixed by set screws 33 to the axle and which faces a hub cap 34 mounted on boss 36 of the wheel hub 26. As seen more particularly in Fig. 4, a first magnet disc 38 is auxiliary mounted for rotation on the plug 32 by a pivot bolt 40 and spaced from the plug 32 by a bushing 42 on the disc 38. The outer face 44 of the disc 38 carries a ring 46 of fixed, spaced magnets. A stop pin 48 projects from the plug 32 through a first aperture 50 in the disc 38 and a spring air valve 52 projects from the plug 32 through a second aperture 54 in the disc 38 which is radially opposite to the aperture 50. A second magnet disc 56 faces the first magnet disc 38 and is mounted on to the hub cap 34 on blocks 58 by means of bolts 60. The disc 56 carries a ring 62 of fixed, spaced magnets which registers with the ring 46 on the disc 38.

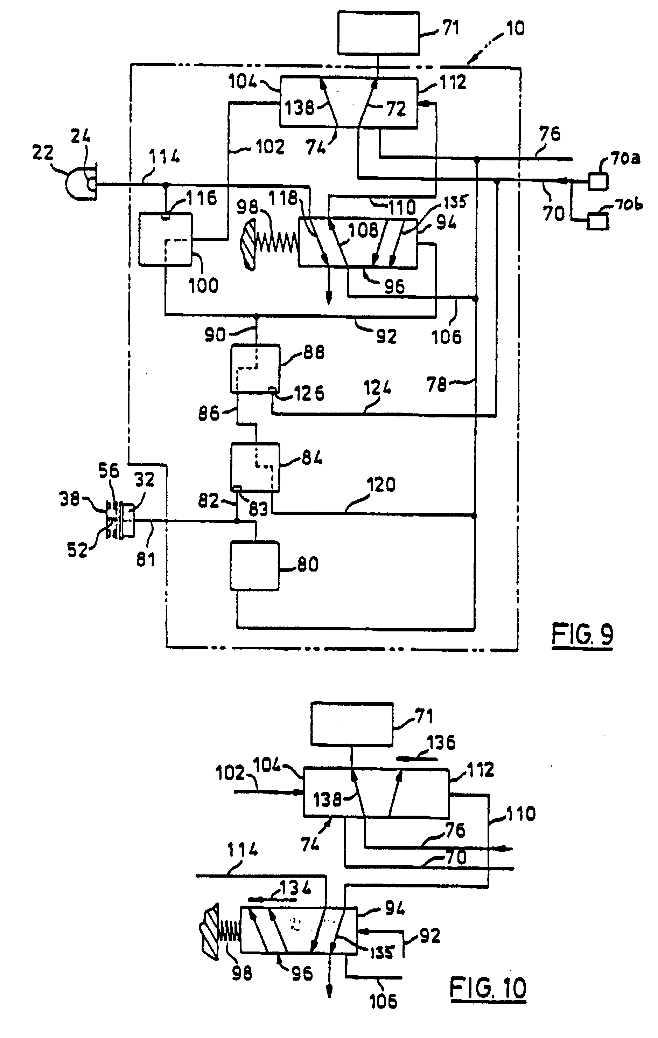

The air flow system associated with the trailer 10 is shown in Fig. 9 of the drawings and consists of an air brake supply line 70 passing to a service brake system 71 of the trailer through a normally open port 72 of a first shuttle valve 74, and an auxiliary air line 76 which is normally closed by the shuttle valve 74.

The brake supply line 70 leads from a service or foot brake 70a or from a trailer only brake 70b (the separate trailer brake is also called "the spike"). The auxiliary air supply line 76 is connected by a line 78 to a pressure reducing valve 80 and from the valve 80 through a line 81 to the normally closed spring air valve 52. The line 81 is connected by a line 82 to a control port 83 of a first normally closed pass control valve 84. The auxiliary air supply line 76 is connected through the line 78 by way of a line 120 to pass control valve 84, thence by a line 86 to a second normally open pass control valve 88, and thence by a line 90 to connect with a line 92 impinging on one end 94 of a second shuttle valve 96 which bears at its other end a compression spring 98. The line 92 connects also through a normally closed third pass control valve 100 and a line 102 to impinge on one end 104 of the first shuttle valve 74. The auxiliary air supply line 76 connects, by a line 106 through a normally open port 108 of second shuttle valve 96, with a line 110 which impinges on the other end 112 of the first shuttle valve 74. The bumper tube 24 is connected by an air line 114 to a control port 116 of the pass control valve 100 and to a normally open port 118 of the shuttle valve 96 to air. The brake supply line 70 is connected by a line 124 to control port 126 of the pass control valve 88.

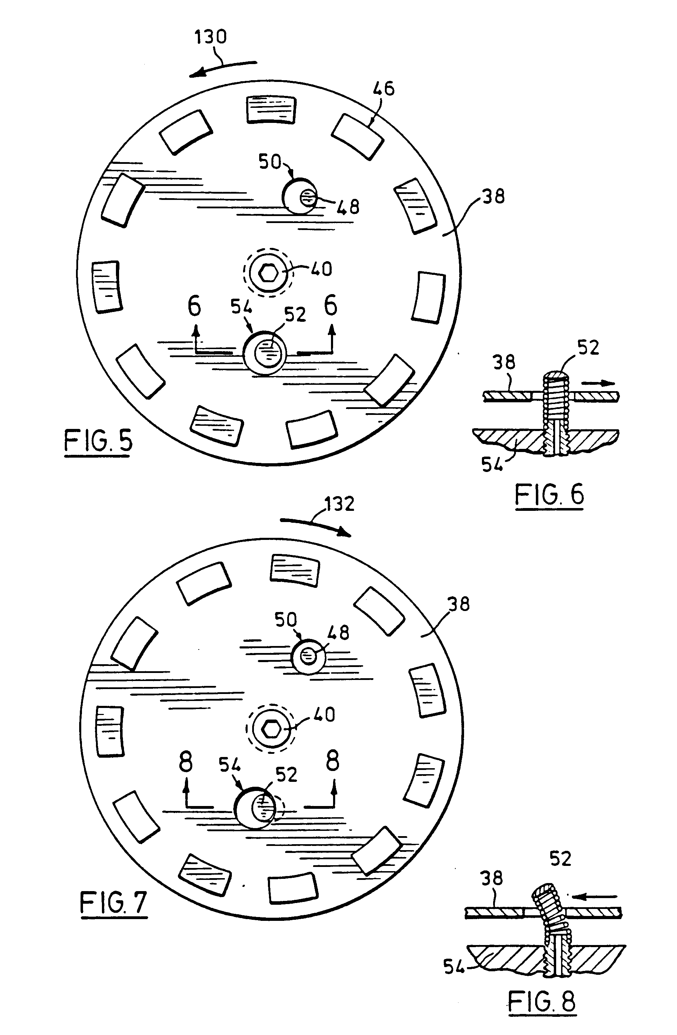

In the operation of the embodiment of Figs. 3 to 8 the operator normally controls the brake system of the trailer 10 through the brake line 70. When the trailer 10 is moving forward the magnetic disc 56 rotates the magnetic disc 38 in the direction of arrow 130 as seen in Fig. 5 and the pin 48 prevents the valve 52 from being opened, as seen in Fig. 6. However, movement of trailer 10 in reverse, i.e. backwards, causes the disc 56 to rotate the disc 38 in the opposite direction as indicated by arrow 132 in Fig. 7 and this movement of the disc 38 opens the valve 52 as seen in Fig. 8.

The opening of the valve 52 vents air from the lines 81 and 82 which opens the port 83 of the valve 84 and allows pressurized air from the line 120 to pass through the valve 84, the line 86, the valve 88, the line 90 and the line 92 to throw the shuttle valve 96, against the action of the spring 98, in the direction of arrow 134 as seen in Fig. 10, relieving the pressure on the end 112 of the shuttle valve 74 by venting line 110 through a port 135, as seen in Fig. 10. Also the venting of the bumper tube 24 through the port 118 is cut off. This brings the brake system into readiness for automatic operation by the contact of the bumper tube 22 with an obstruction.

When the bumper tube 22 comes into contact with any obstruction an air pulse is sent from the tube 24 along the line 114 to the valve 100 which opens the port 116 and allows pressurized air from the line 92 to pass through the line 102 and against the end 104 of the shuttle valve 74, throwing the valve 74 in the direction of arrow 136 as seen in Fig. 10, thus closing the line 70 and opening the auxiliary air line through a port 138 to the brake system 71. This automatically operates the brake system 71 to stop the reverse movement of the trailer 10 immediately.

In order to release the brake system 71 from the automatically actuated mode the operator of the vehicle presses the foot brake which actuates the valve 88 through the lines 70 and 124 to the port 126. This closes the valve 88, cutting off the air supply to the lines 90 and 92 and relieving the pressure on the end 94 of the shuttle valve 96. The shuttle valve 96 is thus allowed to be thrown back by the spring 98 to its normal position and allows air from the line 106 to pass through the port 108 and the line 110 to the end 112 of the shuttle valve 74 which throws that valve back to its normal position.

When the operator releases the foot brake or the trailer only brake, the port 126 is opened which returns the system to its armed mode. On the resumption of forward movement of the trailer 10, the air valve 52 returns to its normal closed position as seen in Fig. 5 and 6. This closes the port 83 of the valve 84, thus returning the system to its original (normal) mode of operation.

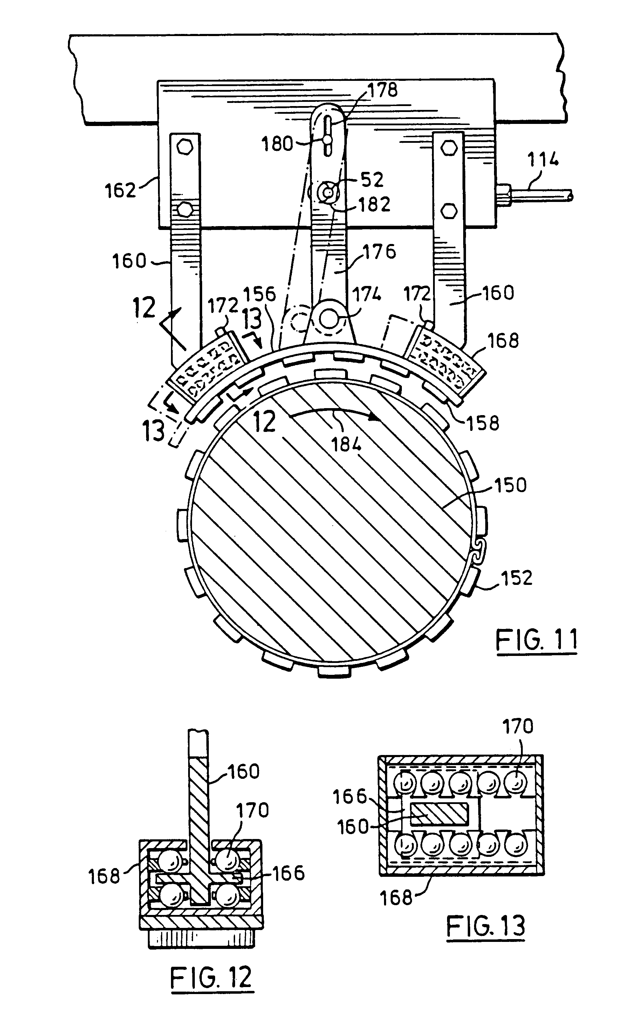

In the modification shown in Figs. 11 to 13 of the drawings the invention is activated through a drive shaft 150 of a vehicle which carries a circumferential band 152 of magnets. An arcuate head 154 floats over the band 152 and comprises a curved plate 156 carrying a row 158 of magnets on its concave side concentric with the band 152. The head 154 is carried by a pair of support arms 160 fixed to a block 162 on the chassis of the vehicle. The free end portion 164 of each arm 160 carries lateral flanges 166 which are enclosed in a bearing box 168 encasing a row of spherical bearings 170 along each crevice formed by flanges 166 and free end portion 164. Stops 172 limit the travel of the plate 156. The plate 156 is connected through a pivot pin 174 to one end of a link arm 176 which is pivotally connected through a slot 178 at its other end to a pin 180 on the block 162. A spring valve 52 projects through an aperture 182 located in the arm 176 between the pivot pins 174 and 180.

In the operation of the embodiment of Figs. 11 to 13 the rotation of the drive shaft 150 in the forward operation of the vehicle cause one plate 156 to move in the direction of arrow 184 by the action of the magnets of the band 152 on the magnets of the row 158, keeping the air valve 52 centered in the aperture. When the vehicle moves in reverse the rotation of the drive shaft 150 in the opposite direction causes the plate 156 to move in the same direction which causes the link arm 176 to move thereby opening the air valve 52 and arming the system of Fig. 9 in the same manner as previously described.

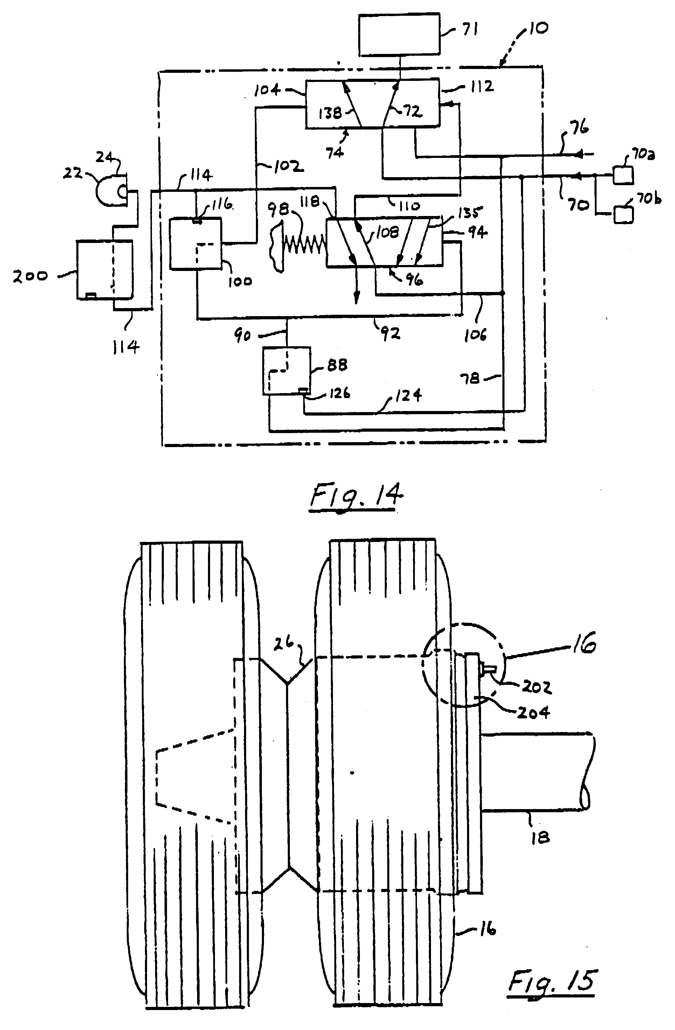

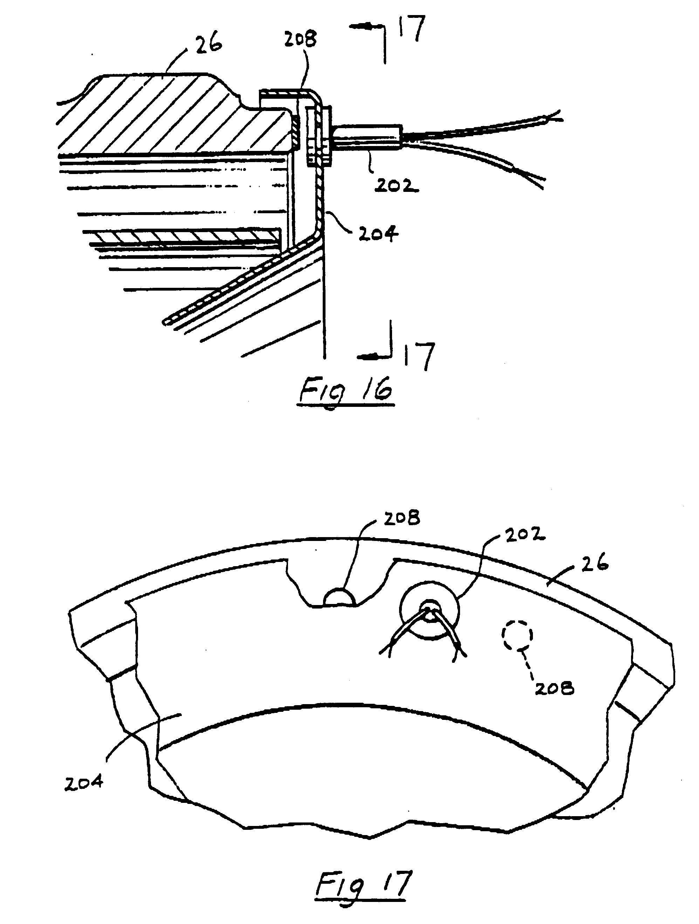

In a second embodiment of the invention shown in Figs. 14 to 17 of the drawings the valve 52, the pressure reducing valve 80 and the control valve 84 are deleted and the auxiliary air supply line 76 is connected directly to the normally open pass control valve 88. This allows the brake system to be in readiness at all times for automatic operation by the contact of bumpers tube 22 with an obstruction. If it is desired to disarm the brake system when the vehicle is in forward motion a normally open air operated solenoid valve 200 is located in line 114. A battery operated sensor 202 is fixed on a stationary backplate 204 of a brake drum casing of the wheel 16 of the vehicle and a pair of spaced magnets 208 are fixed on the brake drum 26 facing the sensor 202 as seen in Figs. 15, 16 and 17.

In the operation of the embodiment shown in Figs. 14 to 17 the brake system is armed as the vehicle moves forward, and the magnets 208 provide pulses to the sensor 202. When the vehicle reaches a predetermined minimum speed the frequency of the pulses causes the sensor 202 to signal the valve 200 to close which disarms the brake system by cutting off any pulses of air from travelling along the line 114 from the bumper 22 should the bumper be impacted.

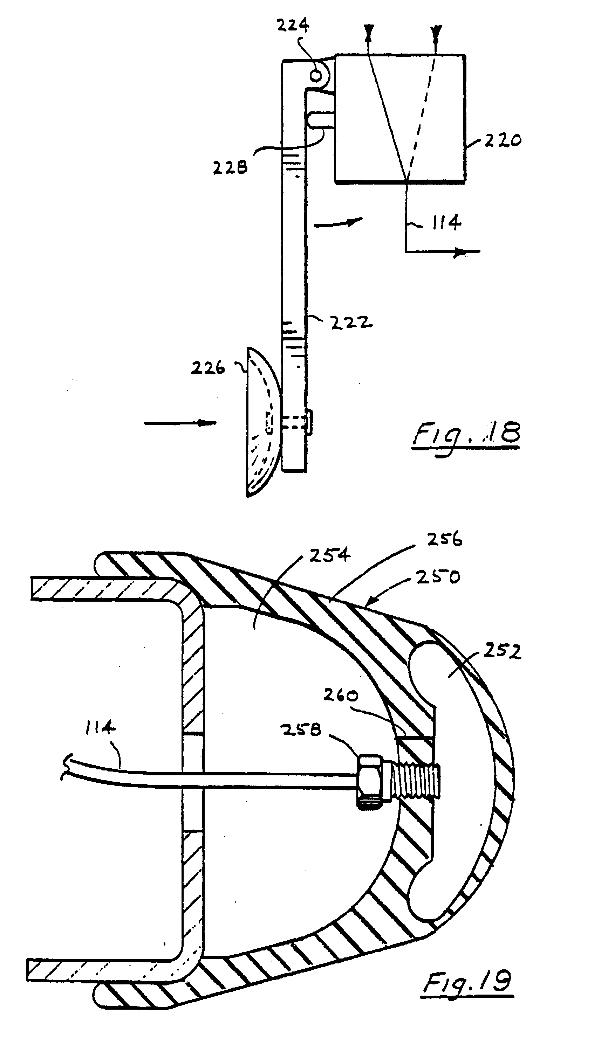

Another means of disarming the brake system of Fig. 14 is shown in Fig. 18 in which the solenoid valve 200 is replaced by a mechanically operated normally open valve 220. A lever 222 depends from the valve 220 one end of the lever being pivotably connected by a pin 224 to the valve 220 and the other end of the lever carrying a dish 226. A plunger 228, which operates the valve 220, contacts the lever 222. In operation the velocity of the vehicle in forward movement creates air pressure on the dish 226 which causes the lever 222 to depress the plunger 228 to close the valve 220. The lever 222 is located on the underside of the vehicle and can be constructed and arranged to act as a governor, disarming the brake system at a given airflow corresponding to a given speed of the vehicle by cutting off any pulses of air along the line 114 from the bumper 22 should the bumper be impacted.

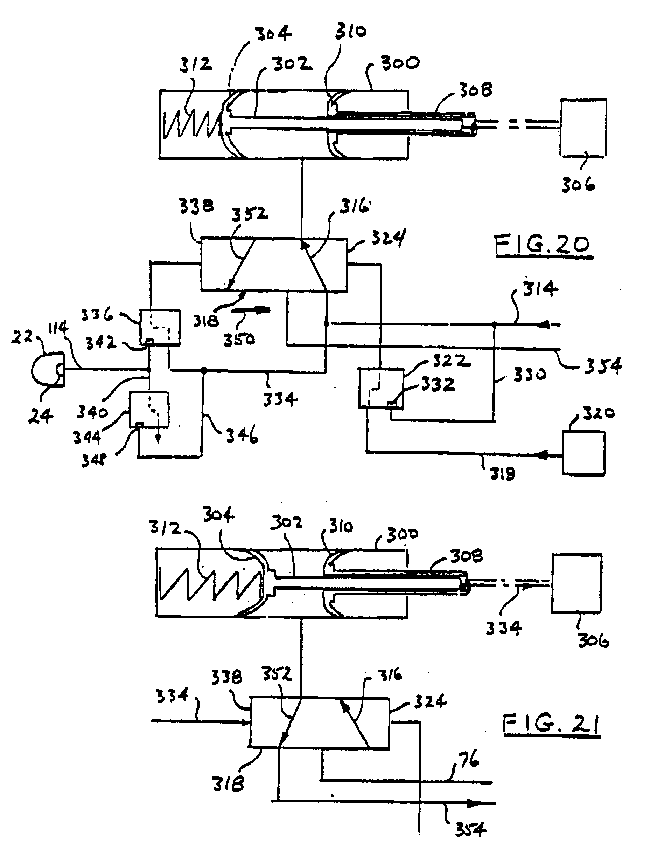

The bumper 22 may be modified as seen in Fig. 19 of the drawings. In this embodiment a bumper 250 comprises an outer air chamber 252 positioned in front of a cavity 254 between sides 256 of the bumper 250. The chamber 252 is connected through a fitting 258 directly into the line 114 of the system of Fig. 9 and includes a breather passage 260 connecting the chamber with the cavity 254. This construction gives an instantaneous air pulse to the line 114 on impact of the bumper 22 with an obstacle. Also the breather passage 260 allows the air pressure within the chamber 252 to be equalised with the ambient air pressure.

In a third embodiment of the invention the emergency brake system of the tractor or trailer is used to arm the brake system constantly. As seen in Fig. 20, the emergency brake system includes a cylinder 300 having a first piston 302 connected at one end to a first diaphragm 304 and at the other end to the cam of vehicle brake (indicated diagramatically by numeral 306). A second, hollow, piston 308, coaxial with the piston 302, is connected to one end to a second diaphragm 310 and at the other end to the cam of the brake 306. A compression spring 312 impinges on that side of the diaphragm 304 opposite the piston 302, is connected at one end to a second diaphragm 310 and at the other end to the cam of the brake 306. A compression spring 312 impinges on that side of the diaphragm 304 opposite the piston 302 and the brake is disengaged by air pressure through an emergency brake air line 314 onto the diaphragm 304 which causes compression of the spring 312. To engage the brake 306 pressurized air is released from the cylinder 300 to allow the compression spring 312 to act against the diaphragm 304 which moves the piston 302 to cause the brake to be engaged. The emergency brake air line 314 passes through a normally open port 316 of a shuttle valve 318 to the cylinder 300 betrween the diaphragms 304 and 310. The open port 316 serves to keep the emergency brake 306 in a released position. A line 319 from an air tank 320 passes through a normally closed pass control valve 322 and impinges on one end 324 of the shuttle valve 318. A line 330 connects the line 314 with a control port 332 of the valve 322. A line 334 leads from the line 314 through a normally closed amplifying pass control valve 336 to impinge on the other end 338 of the shuttle valve 318. A line 340 leads from a control port 342 of valve 336 through a normally closed second pass control valve 344 to atmosphere. A line 346 connects a control port 348 of the valve 344 with lines 334 and 214. Air line 114 from the tube 24 of the bumper 22 is connected to the line 340.

The brake 306 is normally disengaged by air pressure from the line 314 acting on the diaphragm 304 which causes the compression of the spring 312. When pressurized air is released from the cylinder 300 by the action of the emergency brake it allows the compression spring 312 to act against the diaphragm 304 which moves the piston 302 causing the brake to be engaged. The system is constantly armed and when the bumper 22 contacts an obstruction the air pulse through the line 114 opens the valve 336 and passes air from the line 334 to impinge on the end 338 of the shuttle valve 318. The shuttle valve 318 is thus thrown in the direction of arrow 350 as seen in Fig. 21. This cuts off the air passing from the line 314 to the cylinder 300 and vents the air from the cylinder 300 through a port 352 and a line 354 to atmosphere, which then allows the compression spring 312 to push the piston 302 to apply the brake 306. The cutoff of air from the line 314 opens the valve 322 and allows air from the tank 320 through the line 319 to impinge on the end 324 of the shuttle valve 318 and reset the brake system.

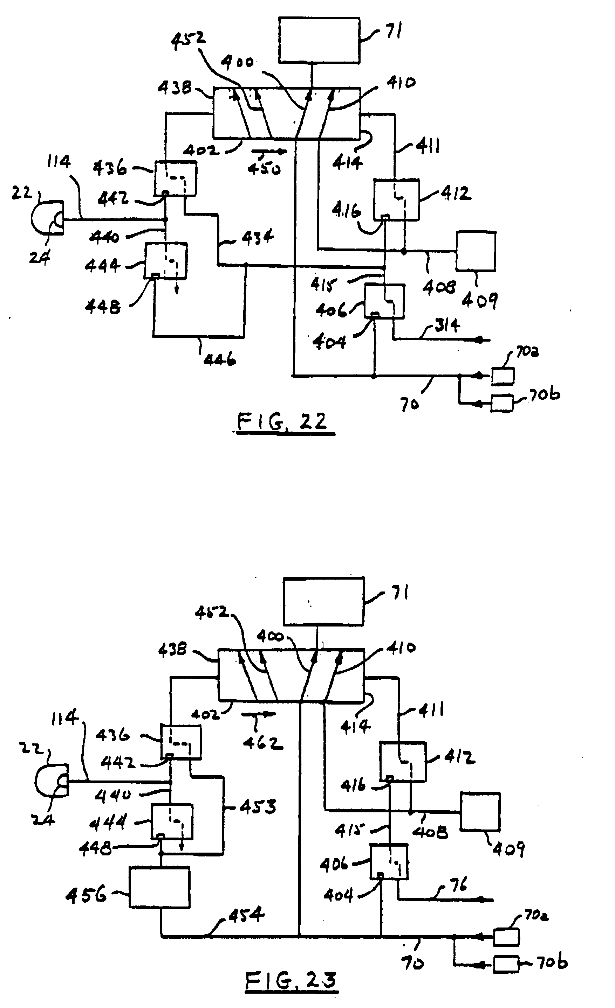

In a fourth embodiment of the invention, shown in Fig. 22 of the drawings, the brake system may be rearmed by the service (foot) brake, the emergency brake or the trailer only brake. In this embodiment the air brake line supply 70 from the service brake 702 and the trailer only brake 706 is connected to a normally open port 400 of a shuttle valve 402 to the service brake 71 and to control port 404 of a normally open first pass control valve 406. Another air line 408 from an auxiliary constant pressure air tank 409 is connected to a second normally closed port 410 of the shuttle valve 402 and also by a line 411 through a normally closed second pass control valve 412 to impinge on one end 414 of the shuttle valve 402. The air supply line 314 from the emergency brake is connected through the valve 406 and a line 415 to a control port 416 of the valve 412. A line 434 leads from line 415 through a normally closed amplifying valve 436 to impinge on the other end 438 of the shuttle valve 402. The air line 114 from the valve 24 of the bumper 22 is connected to a line 440 which leads from a control valve 444 to atmosphere. A line 446 connects a control port 448 of the valve 444 with the line 434.

In the operation of the embodiment of Fig. 22 the brake system is armed by the line 408 from the air tank 409. An impact on the bumper 22 causes an air pulse to pass through the line 114 to open the valve 436 which allows the air to pass from the line 434 to impinge on one end 438 of the shuttle valve 402 to throw it in the direction of arrow 450. This causes air from the tank 409 to pass through the line 408 and a port 452 of the shuttle valve 402 to the brake 71. The brake may be released and the system rearmed in any one of three ways:

(1) by the footbrake. Applying the foot brake 70a supplied air from the line 70 to the port 404 and closes the valve 406 allowing the lines 415, 434 and 446 to exhaust. The exhaustion of the line 415 opens the valve 412 and allows air from the tank 409 through the lines 408 and 411 to impinge on the end 414 of the shuttle valve 402 and reset the system.

(2) by the trailer only brake. Applying the trailer only brake 70b supplies air from the line 70 and the operation is the same as in (1).

(3) by the emergency brake. By applying the emergency brake air is discharged from the line 314 which exhausts air through the valve 406 from the line 415, 434 and 446. This causes the valve 412 to open and feeds air from the tank 409 through the line 408 to the end 414 of the shuttle valve 402 which rearms the system.

Fig. 23 shows an alternate embodiment to that shown in Fig. 22, in which the line 434 of Fig. 22 is replaced by a line 453 from the port 448 of the valve 444 to the end 438 of the shuttle valve 402 and the line 446 of Fig. 22 is replaced by a line 454 from the line 70 through an air reservoir 456 to the port 448 of the valve 444. The air reservoir 456 includes a bleed-off valve not shown. In the operation of this embodiment the application of the foot brake charges the reservoir 456 through the line 70 which closes the valve 448. Air then begins to bleed out of the reservoir 456 and after a predetermined time the pressure is reduced in the reservoir 456. On impact of the bumper 22 air from the line 114 passes through the line 440 and opens the valve 436. If there is air pressure in the reservoir 456 then the shuttle valve 402 will be activated in the direction of arrow 462, allowing air from the tank 409 to pass through the lines 408 and the port 452 to the brake chamber 71 which will apply the brakes. If there is no air pressure in the reservoir 456 then no air will pass through the line 453 to the end 438 of the shuttle valve 402, thus rendering any impact on the bumper inoperative to activate the braking system.

It will be appreciated that the tractor-trailer combination may be rigid and that the invention is also applicable to a tractor only vehicle.

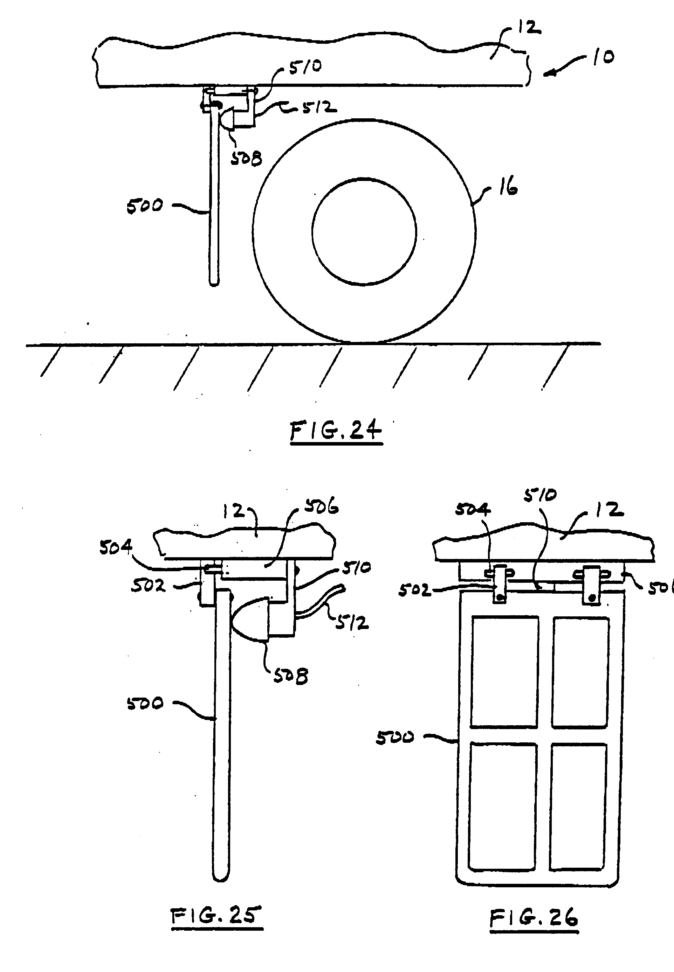

In the embodiment shown in Figs. 24 to 26 of the drawings a gate 500 depends from the frame 12 in front of each of the rear wheels 16 of the trailer 10. The gate 500 is pivotally attached to the frame 12 by a pair of lugs 502 each freely swingable on a U-shaped pin 504 fixed to a plate 506 which is bolted to the frame 12. A sensor 508 similar in function to the bumper tube 22 of the embodiment shown in Figs. 1 and 2 of the drawings is fixed by a bracket 510 to the plate 506 and is positioned adjacent to the gate 500. The sensor 508 is connected by an air line 512 to the control port 116 of the air flow system of Fig. 9. In operation the contact of the gate 500 with an obstruction swings the gate against the sensor 108 which sends an air pulse along the line 512 to the valve 100 which operates the brake system 71 to stop the forward movement of the trailer 10 immediately. Of course in this embodiment it is necessary to modify the device of Figs. 3 to 8, 11 to 13 or 16 and 17 in order to arm the brake system on forward movement of the vehicle. Also, the gate 500 could be positioned in front of the forward wheels of a vehicle.

It will be appreciated that the bumper tube 22 could be mounted on the front of a vehicle, in which case the automatic braking system would be disarmed when the vehicle exceeds a predetermined speed, say ten miles per hour.

## Claims

1. A method of operating the braking system of a vehicle, comprising the steps of automatically pneumatically arming the braking system for actuation, detecting the vehicle contacting an obstruction when the vehicle is moving and generating a pneumatic detector signal to cause brake application, the braking system being releasable, automatically rearmable and disarmed automatically on forward movement of the vehicle.

2. A method as claimed in Claim 1 in which the system is constantly armed by auxiliary air pressure.

3. A method as claimed in Claim 1 in which the braking system is disarmed automatically after a predetermined time.

4. A method as claimed in Claim 1 in which the braking system is constantly armed by any one of an emergency brake system, an auxiliary air tank (459) or an auxiliary air reservoir (456).

5. A method as claimed in Claim 1 in which the braking system is disarmed automatically upon forward movement of the vehicle (10) attaining a predetermined speed determined by sensing the rotational speed of a member (26) which rotates in one direction proportional to said speed.

6. A method as claimed in claim 5 including the step of arming the braking system by sensing the rotational speed of a member (26) which rotates in a reverse direction proportioned to the speed of the vehicle (10) in the reverse direction.

7. A method as claimed in claim 1 including the step of sensing the velocity of the air flowing past the vehicle and automatically disarming the system when the vehicle (10) reaches a predetermined forward speed.

8. A method as claimed in claim 4 in which the braking system is armed by filling an auxiliary air reservoir (456), the method further including the step of bleeding the reservoir (456) over a predetermined time to disarm the braking system.

9. A motor vehicle braking system for carrying out the method of Claim 1 comprising detector means (21), positioned on the motor vehicle (10) constructed and arranged to detect the vehicle (10) contacting an obstruction when the vehicle (10) is moving and to generate a pneumatic signal on said contact, pneumatic means (52, 74, 84, 96) to arm the system whereby the detector signal when generated causes brake application, means (88) to release and to automatically rearm the system, and further including means (202, 208, 222, 226) to disarm the braking system automatically upon forward movement of the vehicle (10) attaining a predetermined speed.

10. A motor vehicle braking system as claimed in Claim 9 in which the means to arm the system includes an auxiliary air tank (409), and the system is constantly armed.

11. A motor vehicle braking system as claimed in Claim 10 which is arranged to be released and rearmed by the application of any one of the foot brake (70a) the trailer only brake (70b) or a vehicle emergency brake.

12. A motor vehicle braking system as claimed in claims 10 or 11 including means to disarm the system automatically after a predetermined time.

13. A motor vehicle braking system as claimed in Claim 9 further including sensor means effective to sense the rotational direction of a member (26) which rotates in one direction on forward movement of the vehicle (10) and in the opposite direction on rearm and movement of the vehicle (10)

14. A motor vehicle braking system as claimed in Claim 10 in which the disarming means comprises means (222, 226) to sense the velocity of the air flowing past the vehicle (10).

15. A motor vehicle braking system as claimed in Claim 11 in which the system is rearmed by filling the reservoir (456), the reservoir (456) being bled over a predetermined time to disarm the system.

16. A motor vehicle braking system as claimed in Claim 10 in which the detector means comprises a gate (500) positioned forwardly of at least one wheel (16) of the vehicle (10) to detect the vehicle contacting an obstruction.

**Revendications**

1. Procédé de freinage d'un véhicule comprenant les étapes d'armement automatique et pneumatique du dispositif de freinage pour son fonctionnement, de détection du contact du véhicule avec un obstacle lors d'un déplacement du véhicule et de génération d'un signal pneumatique de détection entraînant l'application des freins, le dispositif de freinage étant libérable, automatiquement réarmable et automatiquement désarmé lors d'un déplacement avant du véhicule.

**2.** Procédé selon la revendication 1, selon lequel le dispositif est constamment armé par une pression auxiliaire d'air.

**3.** Procédé selon la revendication 1, selon lequel le dispositif de freinage est automatiquement désarmé après un temps prédéterminé.

**4.** Procédé selon la revendication 1, selon lequel le dispositif de freinage est constamment armé par un quelconque dispositif parmi le frein d'urgence, un réservoir auxiliaire d'air (459) ou un réservoir auxiliaire d'air (456).

**5.** Procédé selon la revendication 1, selon lequel le dispositif de freinage est automatiquement désarmé lors d'un déplacement avant du véhicule (10) atteignant une vitesse prédéterminée déterminée par la détection de la vitesse de rotation d'une pièce (26) tournant dans une direction proportionnellement à ladite vitesse.

**6.** Procédé selon la revendication 5, comprenant une étape d'armement du dispositif de freinage par détection de la vitesse de rotation d'une pièce (26) tournant en direction inverse proportionnellement à la vitesse du véhicule (10) en marche arrière.

**7.** Procédé selon la revendication 1, comprenant une étape de détection de la vitesse de l'air autour du véhicule et de désarmement automatique du dispositif lorsque le véhicule (10) atteint une vitesse avant prédéterminée.

**8.** Procédé selon la revendication 4, selon lequel le dispositif de freinage est armé par remplissage d'un réservoir auxiliaire d'air (456), ce procédé comprenant de plus une étape de ventilation du réservoir (456) sur une période de temps prédéterminée pour désarmer le dispositif de freinage.

**9.** Dispositif de freinage d'un véhicule à moteur pour la mise en oeuvre du procédé selon la revendication 1, comprenant un détecteur (21) placé sur le véhicule à moteur (10), construit et agencé pour détecter le Contact du véhicule (10) avec un obstacle lors d'un déplacement du véhicule (10) et pour générer un signal pneumatique lors dudit contact, des moyens pneumatiques (52, 74, 84, 96) pour armer le dispositif, le signal de détection ainsi généré entraînant l'application des freins, un moyen (88) pour libérer et réarmer automatiquement le dispositif et comprenant de plus des moyens (202, 208, 222, 226) pour désarmer automatiquement le dispositif de freinage lors d'un déplacement avant du véhicule (10) atteignant une vitesse prédéterminée.

**10.** Dispositif de freinage d'un véhicule à moteur selon la revendication 9, dans lequel le moyen d'armement du dispositif comprend un réservoir auxiliaire d'air (409) et dans lequel le dispositif est constamment armé.

**11.** Dispositif de freinage d'un véhicule à moteur selon la revendication 10, prévu pour être libéré et réarmé par l'application d'un quelconque dispositif parmi le frein de service (70a), le frein de remorque (70b) ou un frein d'urgence.

**12.** Dispositif de freinage d'un véhicule à moteur selon la revendication 10 ou 11, comprenant un moyen de désarmement automatique du dispositif après une période de temps prédéterminée.

**13.** Dispositif de freinage d'un véhicule à moteur selon la revendication 9, comprenant de plus un capteur prévu pour détecter le sens de rotation d'une pièce (26) tournant dans une direction lors d'un déplacement avant du véhicule (10) et dans la direction opposée lors d'une marche arrière du véhicule (10).

**14.** Dispositif de freinage d'un véhicule à moteur selon la revendication 10, dans lequel le moyen de désarmement comprend des moyens (222, 226) pour détecter la vitesse de l'air autour du véhicule (10).

**15.** Dispositif de freinage d'un véhicule à moteur selon la revendication 11, dans lequel le dispositif est réarmé par remplissage du réservoir (456), le réservoir (456) étant ventilé sur une période de temps prédéterminée pour désarmer le dispositif.

**16.** Dispositif de freinage d'un véhicule à moteur selon la revendication 10, dans lequel le détecteur comprend un volet (550) placé en avant d'au moins une roue (16) du véhicule (10) pour détecter le contact du véhicule avec un obstacle.

**Patentansprüche**

**1.** Verfahren zur Steuerung des Bremssystems eines Fahrzeuges, mit den Verfahrensschritten der automatischen pneumatischen Aktivierung des Bremssystems für eine Betriebsbereitschaft, der Feststellung, wenn das Fahrzeug während seiner Bewegung ein Hindernis berührt und der Erzeugung eines pneumatischen Ermittlungssignales zur Auslösung einer Bremsung, wobei das Bremssystem lösbar automatisch reaktivierbar und bei einer Vorwärtsbewegung des Fahrzeuges automatisch abschaltbar ist.

2. Verfahren nach Anspruch 1, bei welchem das System dauernd durch einen Hilfsluftdruck aktiviert ist.

3. Verfahren nach Anspruch 1, bei welchem das Bremssystem automatisch nach einer vorgegebenen Zeit entaktiviert wird.

4. Verfahren nach Anspruch 1, bei welchem das Bremssystem dauernd durch irgend ein Hilfsbremssystem, einen Hilfslufttank (459) oder ein Hilfsluftreservoir (456) aktiviert ist.

5. Verfahren nach Anspruch 1, bei welchem das Bremssystem automatisch bei einer Vorwärtsbewegung des Fahrzeuges (10) nach Erreichen einer vorgegebenen Geschwindigkeit entaktiviert wird, die durch ein Erfassen der Drehgeschwindigkeit eines Gliedes (26) ermittelt wird, das in einer Richtung proportional zu dieser Geschwindigkeit rotiert.

6. Verfahren nach Anspruch 5 mit dem Verfahrensschritt der Aktivierung des Bremssystemes durch Ermitteln der Drehgeschwindigkeit eines Gliedes (26), das in umgekehrter Richtung proportional zu der Geschwindigkeit des Fahrzeuges (10) in der umgekehrten Richtung rotiert.

7. Verfahren nach Anspruch 1, mit dem Verfahrensschritt der Ermittlung der Geschwindigkeit der am Fahrzeug vorbeifließenden Luft und der automatischen Entaktivierung des Systemes, sobald das Fahrzeug (10) eine vorgegebene Vorwärtsgeschwindigkeit erreicht.

8. Verfahren nach Anspruch 4, bei welchem das Bremssystem durch das Füllen eines Hilfsluftreservoirs (456) aktiviert wird, und mit dem zusätzlichen Verfahrensschritt der Entlüftung des Reservoirs (456) nach einer vorgegebenen Zeit, um das Bremssystem zu entaktivieren.

9. Motorfahrzeug-Bremssystem zur Durchführung des Verfahrens nach Anspruch 1, mit einer Ermittlungsvorrichtung (21), die am Motorfahrzeug (10) zur Feststellung ausgebildet und angeordnet ist, ob das Fahrzeug (10) in Bewegung ein Hindernis berührt, und zum Erzeugen eines pneumatischen Signales bei einer solchen Berührung, mit einer pneumatischen Einrichtung (52, 74, 84, 96) zur eines Ermittlungssignales eine Bremsung verursacht wird, mit einer Einrichtung (88) zum Lösen und zur automatischen Reaktivierung des Systems, und mit Mitteln (202, 208, 222, 226) zur automatischen Entaktivierung des Bremssystems, wenn die Vorwärtsbewegung des Fahrzeugs (10) eine bestimmte Geschwindigkeit erreicht.

10. Motorfahrzeug-Bremssystem nach Anspruch 9, bei welchem die Einrichtung zur Aktivierung des Systems einen Hilfslufttank (409) aufweist und das System dauernd aktiviert ist.

11. Motorfahrzeug-Bremssystem nach Anspruch 10, so ausgebildet, daß es durch die Betätigung irgendeiner Fußbremse (70a), der einzigen Bremse (70b) des Anhängers oder einer Fahrzeughilfsbremse gelöst und reaktiviert wird.

12. Motorfahrzeug-Bremssystem nach Anspruch 10 oder 11, mit einer Einrichtung zur automatischen Entaktivierung des Systems nach einer vorgegebenen Zeit.

13. Motorfahrzeug-Bremssystem nach Anspruch 9 mit einer Fühleinrichtung zur Feststellung der Drehrichtung eines Gliedes (26), das in der einen Richtung bei einer Vorwärtsbewegung des Fahrzeuges (10) und in der entgegengesetzten Richtung bei Reaktivierung und Bewegung des Fahrzeugs (10) rotiert.

14. Motorfahrzeug-Bremssystem nach Anspruch 10, bei welchem die Einrichtung zur Entaktivierung Mittel (222, 226) aufweist, um die Geschwindigkeit der am Fahrzeug (10) vorbeifließenden Luft zu erfassen.

15. Motorfahrzeug-Bremssystem nach Anspruch 11, bei welchem das System durch Füllen des Reservoirs (456) reaktiviert wird und das Reservoir (456) über eine vorgegebene Zeit entlüftet wird, um das System zu entaktivieren.

16. Motorfahrzeug-Bremssystem nach Anspruch 10, bei welchem die Ermittlungsvorrichtung ein Gitter (500) aufweist, das vor mindestens einem Rad (16) des Fahrzeuges (10) angeordnet ist, um festzustellen, wenn ein Fahrzeug ein Hindernis berührt.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

_Fig. 14_

_Fig. 15_

Fig 16

Fig 17

224

228

220

114

222

226

_Fig. 18_

256

254

250

252

260

258

114

_Fig. 19_

FIG.20

FIG. 21

FIG. 22

FIG. 23

20

FIG.24

FIG.25

FIG.26

21